# EUROPEAN PATENT SPECIFICATION

(11) **EP 2 045 291 B1**
(45) Date of publication and mention of the grant of the patent: **18.02.2015**
(21) Application number: 07743544.4
(22) Date of filing: 17.05.2007
(51) Int. Cl.: C08L 27/06, C08K 3/26, C08K 5/17, C08K 5/524, C08K 5/51

(54) **VINYL CHLORIDE RESIN COMPOSITION**
VINYLCHLORIDHARZZUSAMMENSETZUNG
COMPOSITION DE RÉSINE CHLORURE DE VINYLE

(30) Priority: 26.07.2006 JP 2006202758
(43) Date of publication of application: 08.04.2009
(73) Proprietor: Adeka Corporation, Tokyo 116-8554 (JP)
(72) Inventor: HONDA, Tomoki, Saitama 336-0022 (JP); MITSUDERA, Taro, Saitama 336-0022 (JP)
(74) Representative: Forstmeyer, Dietmar
(86) International application number: PCT/JP2007/060109
(87) International publication number: WO 2008/012982

(56) References cited:
- EP-A2- 0 668 316
- JP-A- 01 178 543
- JP-A- 04 202 451
- JP-A- 06 145 493
- JP-A- 10 306 185
- JP-A- 59 140 261
- JP-A- 61 247 748
- JP-A- 2000 273 259
- US-A1- 2004 132 874

## Description

### TECHNICAL FIELD

The present invention relates to a vinyl chloride resin composition. More specifically, the present invention relates to a vinyl chloride resin composition, which is obtained without using heavy metal-based stabilizers, and is excellent in thermal stability, heat aging resistance, weatherability and the like, especially excellent in discoloration resistance during processing and using.

### BACKGROUND ART

Chlorine-containing resins such as a vinyl chloride resin and the like are used in various applications due to their excellent flame retardancy and chemical resistance. However, the chlorine-containing resins have a drawback that they thermally decompose and set off dehydrochlorination, as a result, the mechanical strength is lowered and discoloration occurs, and the commercial value of the resins is detracted.

In order to solve the above-mentioned drawback, various stabilizers have been developed, especially, lead compounds, mixtures of cadmium compounds and barium compounds, and the like are known to possess excellent stabilizing effects. However, from a standpoint of safety, there is a tendency that the use of lead compounds and cadmium compounds is restricted in recent years, and these compounds are being replaced with zinc compounds that have high safety in combination with alkaline earth metal salts of organic acids and with inorganic compounds such as hydrotalcite, zeolite and the like for the stabilization.

However, these low-toxicity stabilizers do not provide enough stabilizing effects by themselves. Therefore, they are used in combination with various additives designed to increase resistance of the resin to light, heat, oxidation and the like, the additives including organic phosphite compounds; epoxy compounds; phenol type antioxidants; ultraviolet absorbers such as benzophenones, benzotriazoles and the like; hindered amine type light stabilizers; and others.

Further, as low toxicity stabilizers, zinc type stabilizers such as zinc salts of organic acids and the like are conventionally used in many cases. However, use of zinc is regulated in Europe and other places because of its influence on aquatic life.

In recent years, therefore, use of organic based stabilizers (OBS) obtained by using non-metal stabilizers as the main component has attracted attention.

The non-metal stabilizers have been investigated for some time and, for example, aminocrotonic acid esters have been proposed (see Patent Documents 1 and 2, and the like). However, as their stabilizing effect is not enough, it is indispensable to use the zinc salt of organic acid together, and it was difficult to provide an OBS stabilizer by the aminocrotonic acid esters alone.

For example, in Patent Document 3, a non-heavy metal stabilizer is proposed, which is obtained by a combination of calcium or magnesium salts of organic acids, phosphite esters, aminocrotonic acid esters and the like, or further including inorganic compounds such as hydrotalcites and the like. However, this stabilizer had problems such as still inferior resistance to discoloration and the like.

In particular, since a rigid vinyl chloride resin is added with liquid components such as a plasticizer and the like in no or only a little amount (0 to 10 parts by weight based on 100 parts by weight of vinyl chloride resin), its melt viscosity is high, processing is required high temperature and high shear imparted to the resin is caused during the processing. Therefore, high level stabilization is required and an excellent stabilization method has been desired.

In Patent Document 4, a vinyl chloride resin composition for an agricultural use is proposed, which is obtained by adding 20 to 90 parts by weight of a plasticizer, 0.01 to 10 parts by weight of a specific cyclic phosphite compound, 0.01 to 10 parts by weight an epoxy compound, and 0.1 to 5 parts by weight of an antifog additive to 100 parts by weight of vinyl chloride resin. In Patent Document 5, a chlorine-containing resin composition is proposed, which is obtained by adding a specific organic cyclic phosphite compound. However, nothing is described in these documents about combining these cyclic phosphite compounds with amino crotonic acid esters to provide OBS stabilizers.

Patent Document 1: Japanese Patent Application Publication No. S49-36820
Patent Document 2: Japanese Patent Application Publication No. S50-15490
Patent Document 3: Japanese Patent Laid-Open Publication No. 2000-273259
Patent Document 4: Japanese Patent Laid-Open Publication No. H04-81444
Patent Document 5: Japanese Patent Laid-Open Publication No. 2002-294089

### DISCLOSURE OF THE INVENTION

### PROBLEMS TO BE SOLVED BY THE INVENTION

Accordingly, the object of the present invention is to provide a vinyl chloride resin composition, which is obtained without using heavy metal-based stabilizers, and is excellent in thermal stability, heat aging resistance, especially excellent in resistance to discoloration during processing and using.

### MEANS FOR SOLVING THE PROBLEMS

The present inventors conducted diligent research, as a result, found that a vinyl chloride resin composition composed of perchloric acid-treated hydrotalcite, an organic phosphite ester, an aminocrotonic acid ester and the like can attain the above-mentioned object, and thus, completed the present invention.

That is, the present invention provides a vinyl chloride resin composition characterized by containing (a) 0.001 to 10 parts by mass of at least one kind of perchloric acid-treated hydrotalcite, (b) 0.001 to 10 parts by mass of at least one kind of organic phosphite ester, and (c) 0.001 to 10 parts by mass of at least one kind selected from aminocrotonic acid esters, based on 100 parts by mass of a vinyl chloride resin, wherein the organic phosphite ester (b) is an organic cyclic phosphite compound represented by the following formula (II): 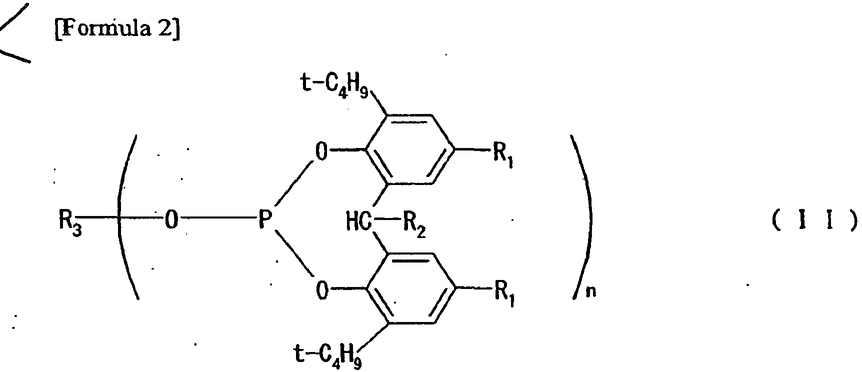 wherein R₁ represents an alkyl group having 1 to 9 carbon atoms, R₂ represents a hydrogen atom or an alkyl group having 1 to 4 carbon atoms, R₃ represents a monovalent group having 1 to 30 carbon atoms or a bivalent group having 2 to 20 carbon atoms which may have an ether bond, n represents 1 or 2, or
wherein the (b) organic phosphite ester is an organic cyclic phosphite compound represented by the following general formula (III): 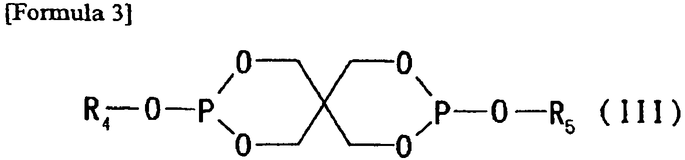 wherein R₄ and R₅ represent an alkyl group having 4 to 20 carbon atoms or a phenyl group which may be mono-, di-, or tri-substituted with alkyl groups having 1 to 5 carbon atoms, the vinyl chloride resin is selected from polyvinyl chloride, chlorinated polyvinyl chloride, polyvinylidene chloride, chlorinated polyethylene, a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-styrene-acrylonitrile copolymer, a vinyl chloride-butadiene copolymer, vinyl chloride-isoprene copolymer, a vinyl chloride-chlorinated propylene copolymer, a vinyl chloride-vinylidene chloride-vinyl acetate terpolymer, a vinyl chloride-maleic acid ester copolymer, a vinyl chloride-methacrylic acid ester copolymer, a vinyl chloride-acrylonitrile copolymer, copolymers of vinyl chloride and various vinyl esthers, blends of these resins with each other; or blends, block copolymers, graft copolymers, of these resins with other chlorine-free synthetic resins.

### BEST MODE FOR CARRYING OUT THE INVENTION

Hereinafter, the vinyl chloride resin composition of the present invention will be described in detail.

The perchloric acid-treated hydrotalcite, which is the (a) component used in the present invention, is a hydrotalcite compound in which part or all of carbonic acid contained therein is replaced by perchloric acid, namely a perchloric acid-modified material.

The hydrotalcite compound is a double salt of carbonic acid with magnesium and aluminum, and preferably is a compound represented by the following general formula (I):

[Formula 1]

MgₓAl₂(OH)₂ₓ₊₄·CO₃·mH₂O (I)

wherein x is an integer equal to 2 or more but less than 20, and m represents an actual number.

Further, the hydrotalcite compound may be either a natural product or a synthetic product. As a synthesizing method of the synthetic product, there may be cited the publicly known methods which are described in Japanese Patent Application Publication No. S46-2280, Japanese Patent Application Publication No. S50-30039, Japanese Patent Application Publication No. S51-29129, and the like. These hydrotalcite compounds may be used without any limitations of their crystal structures, particle sizes of crystals, presence or absence of crystal water and its amount, or the like if present.

The perchloric acid-treated hydrotalcite can be produced easily, for example, by adding hydrotalcite to a dilute aqueous solution of perchloric acid, stirring the mixture, and then filtering, dehydrating, or drying as necessary the resulting mixture. In this case, the molar ratio of the hydrotalcite and the perchloric acid is optionally chosen, but generally, perchloric acid is used preferably in an amount of 0.1 to 2 moles, more preferably in an amount of 0.4 to 1 mole per mole of hydrotalcite. Further, for example, a method described in Japanese Patent Application Publication No. H03-36839 may be mentioned. The perchloric acid-treated hydrotalcite may be used without any limitations of their crystal structures, particle sizes of crystals, presence or absence of crystal water and its amount, or the like if present.

Further, the perchloric acid-treated hydrotalcite may also be used by coating its surface with higher fatty acids such as stearic acid, metal salts of higher fatty acids such as an alkali metal salt of oleic acid, metal salts of organic sulfonic acids such as an alkali metal salt of dodecylbenzenesulfonic acid, higher fatty acid amides, higher fatty acid esters, waxes, or the like.

The content of the perchloric acid-treated hydrotalcite that is the (a) component, is 0.001 to 10 parts by mass, preferably 0.01 to 5 parts by mass, more preferably 0.05 to 2 parts by mass based on 100 parts by mass of the vinyl chloride resin. When the content is less than 0.001 part by mass, almost no effect of addition is obtained. When the content is more than 10 parts by mass, the effect is not increased, but rather, undesirable influences may be exerted on thermal stability, discoloration resistance, and the like in some cases.

The phosphite esters that is the (b) component used in the present invention, include, for example, triphenyl phosphite, tris(2,4-di-tert-butylphenyl) phosphite, tris(nonylphenyl) phosphite, tris(dinonylphenyl) phosphite, tris(mono/di-mixed nonylphenyl) phosphite, bis(2-tert-butyl-4,6-dimethylphenyl)ethyl phosphite, diphenyl acid phosphite, 2,2'-methylenebis(4,6-di-tert-butylphenyl)octyl phosphite, diphenyldecyl phosphite, phenyldiisodecyl phosphite, tributyl phosphite, tris(2-ethylhexyl) phosphite, tridecyl phosphite, trilauryl phosphite, dibutyl acid phosphite, dilauryl acid phosphite, trilauryl trithiophosphite, bis(neopentylglycol)-1,4-cyclohexanedimethyl diphosphite, bis(2,4-di-tert-butyl-phenyl)pentaerythritol diphosphite, bis(2,6-di-tert-butyl-4-methylphenyl)pentaerythritol diphosphite, distearylpentaerythritol diphosphite, tetra(C12-15 mixed alkyl)-4,4'-isopropylidenediphenyl phosphite, bis[2,2'-methylenebis(4,6-diamylphenyl)isopropylidenediphenyl phosphite, hydrogenated-4,4'-isopropylidenediphenol polyphosphite, tetratridecyl-4,4'-butylidenebis(2-tert-butyl-5-methylphenol) diphosphite, hexa(tridecyl)-1,1,3-tris(2-methyl-5-tert-butyl-4-hydroxyphenyl)butane triphosphonite, 9,10-dihydro-9-oxa-10-phosphaphenanthrene-10-oxide, 2-butyl-2-ethylpropanediol-2,4,6-tri-tert-butylphenol monophosphite, and the like.

Organic cyclic phosphite compounds represented by the following general formula (II) are used because they provide the vinyl chloride resin composition with excellent resistance to hydrolysis, stability at high temperature, and resistance to discoloration. 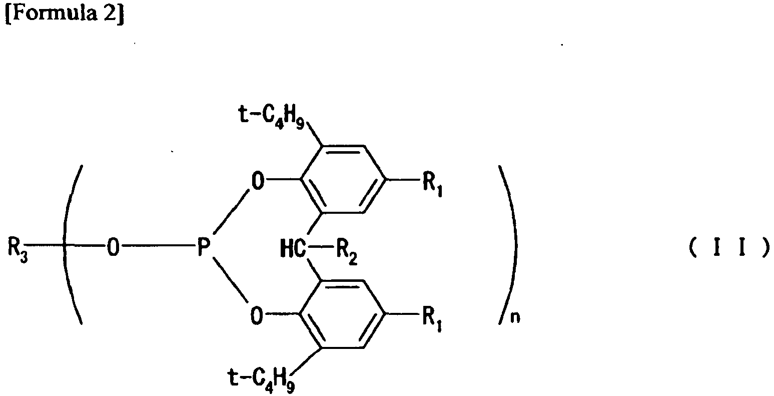 wherein R₁ represents an alkyl group having 1 to 9 carbon atoms, R₂ represents a hydrogen atom or an alkyl group having 1 to 4 carbon atoms, R₃ represents a monovalent group having 1 to 30 carbon atoms or a bivalent group having 2 to 20 carbon atoms which may have an ether bond, n represents 1 or 2.

In the organic phosphite compound represented by the general formula (II), the alkyl group having 1 to 9 carbon atoms represented by R₁ includes methyl, ethyl, propyl, isopropyl, butyl, isobutyl, sec-butyl, tert-butyl, amyl, tert-amyl, hexyl, octyl, isooctyl, 2-ethylhexyl, tert-octyl, nonyl, isononyl, and the like; the aklyl group having 1 to 4 carbon atoms represented by R₂ includes methyl, ethyl, propyl, isopropyl, butyl, sec-butyl, tert-butyl, isobutyl, and the like; the monovalent group having 1 to 30 carbon atoms represented by R₃ includes methyl, ethyl, propyl, isopropyl, butyl, sec-butyl, tert-butyl, isobutyl, amyl, tert-amyl, hexyl, heptyl, octyl, isooctyl, 2-ethylhexyl, tert-octyl, nonyl, tert-nonyl, decyl, isodecyl, dodecyl, tetradecyl, hexadecyl, octadecyl, eicosyl, docosyl, tetracosyl, triacontyl, and the like; the divalent group having 2 to 20 carbon atoms, which may have an ether group, includes residues of glycols such as ethylene glycol, diethylene glycol, triethylene glycol, 1,2-propanediol, 1,3-propanediol, 2-methyl-1,3-propanediol, 2,2-dimethyl-1,3-propanediol, 1,2-butanediol, 1,4-butanediol, 1,5-pentanediol, 3-methyl-1,5-pentanediol, 1,6-hexanediol, 1,10-decanediol, 3,9-bis(1,1-dimethyl-2-hydroxyethyl)-2,4,8,10-tetraoxaspiro[5.5]undecane, and the like.

Among these, R₃ is preferably a monovalent group having 1 to 30 carbon atoms.

Next, specific examples of the organic cyclic phosphite compound represented by the general formula (II) and used in the present invention include, for example, the following compound Nos. II-1 to II-8.

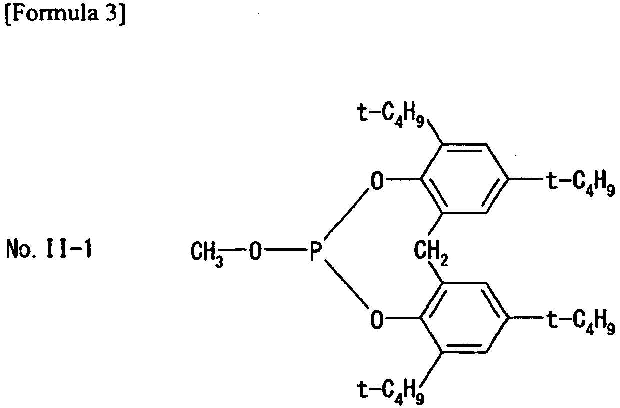

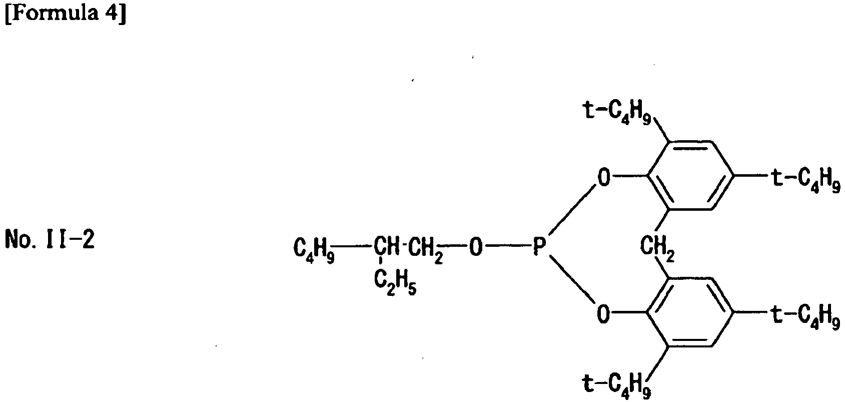

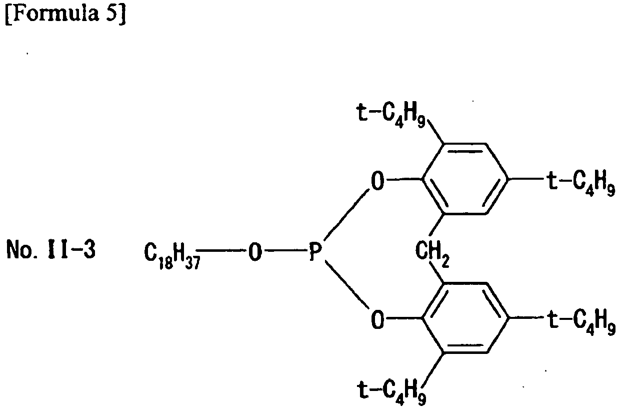

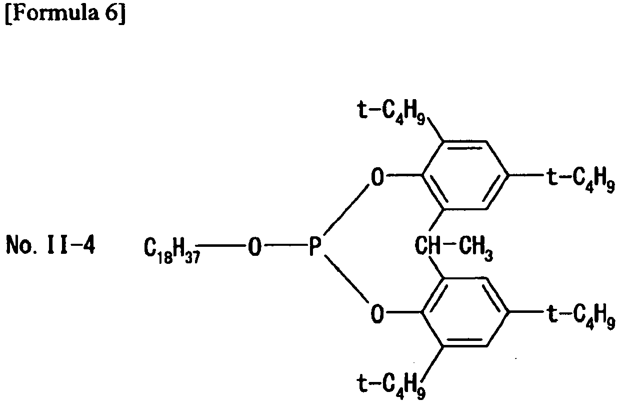

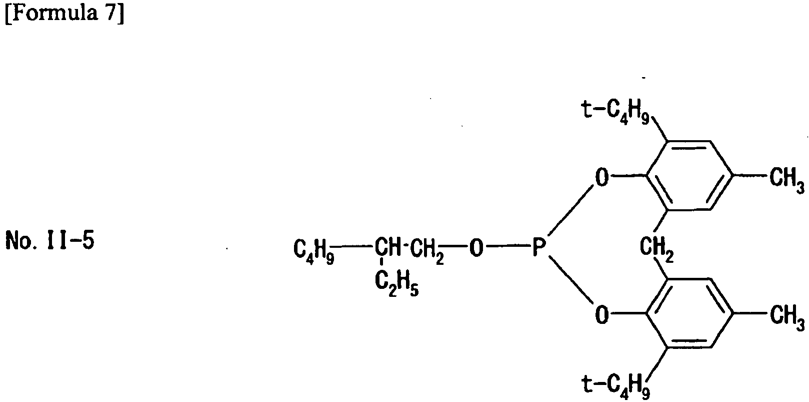

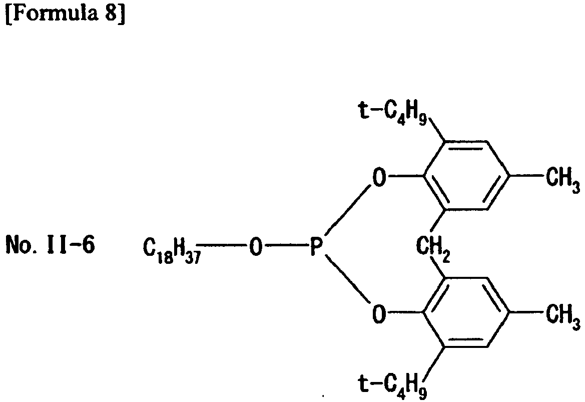

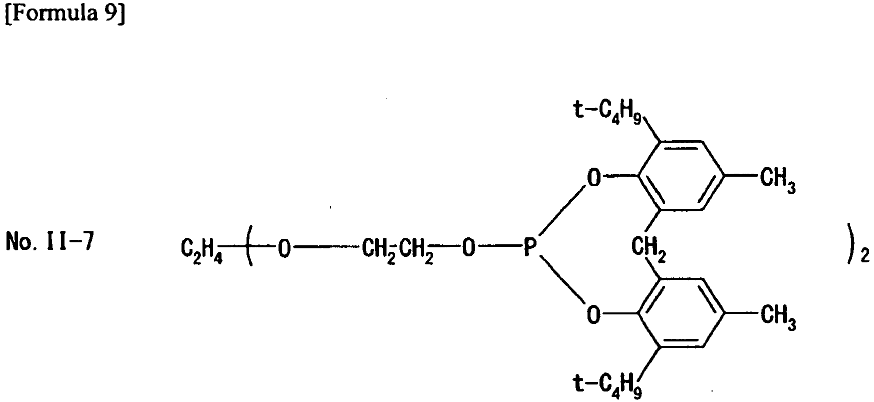

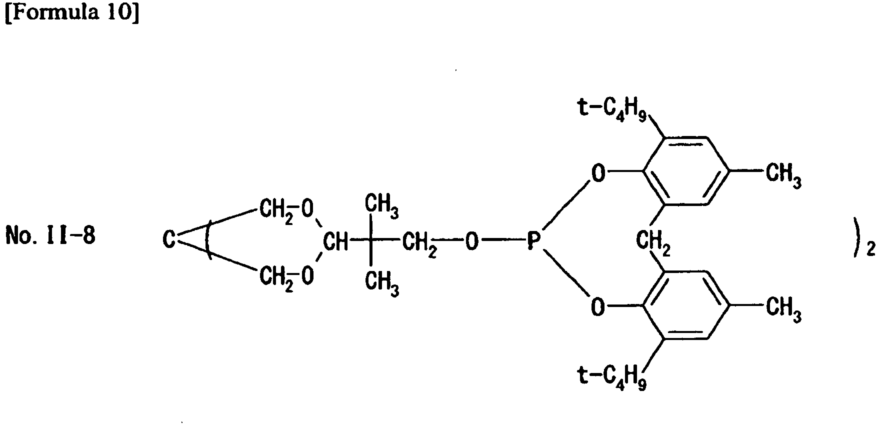

Organic cyclic phosphite compounds represented by the general formula (III) are used, because they provide the vinyl chloride resin composition with excellent resistance to hydrolysis and stability at high temperature. 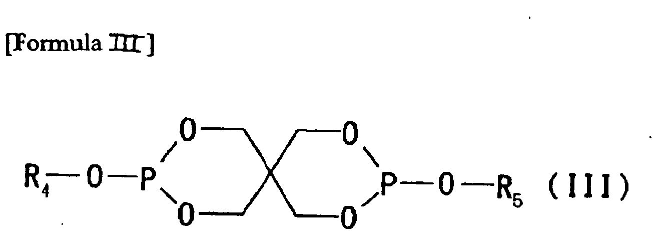 wherein R₄ and R₅ represent an alkyl group having 4 to 20 carbon atoms or a phenyl group which may be mono-, di-, or tri-substituted with alkyl groups having 1 to 5 carbon atoms.

In the organic phosphite compound represented by the general formula (III), the alkyl group having 4 to 20 carbon atoms which may substitute the phenyl group represented by R₄ and R₅ includes butyl, isobutyl, sec-butyl, tert-butyl, amyl, tert-amyl, hexyl, octyl, isooctyl, 2-ethylhexyl, tert-octyl, nonyl, isononyl, decyl, isodecyl, undecyl, dodecyl, tridecyl, tetradecyl, pentadecyl, hexadecyl, heptadecyl, octadecyl, and the like; the alkyl group having 1 to 5 carbon atoms which may substitute the phenyl group includes, for example, methyl, ethyl, propyl, isopropyl, butyl, isobutyl, sec-butyl, tert-butyl, amyl, tert-amyl, and the like.

Next, specific examples of the organic cyclic phosphite compound represented by the general formula (III) and used in the invention include, for example, the following compounds III-1 to III-4:

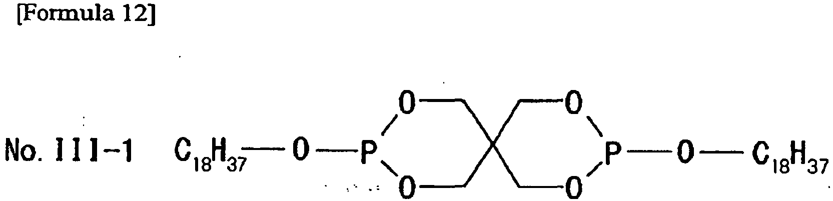

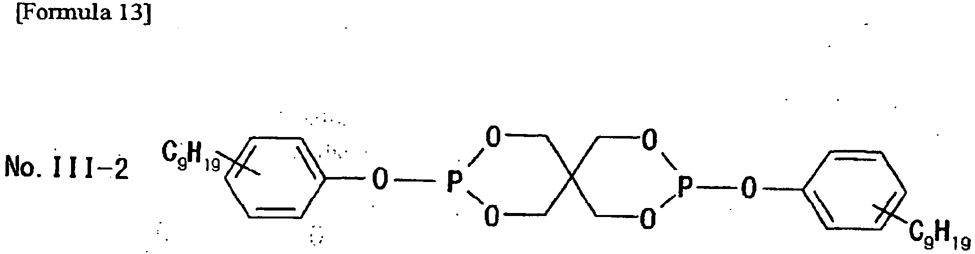

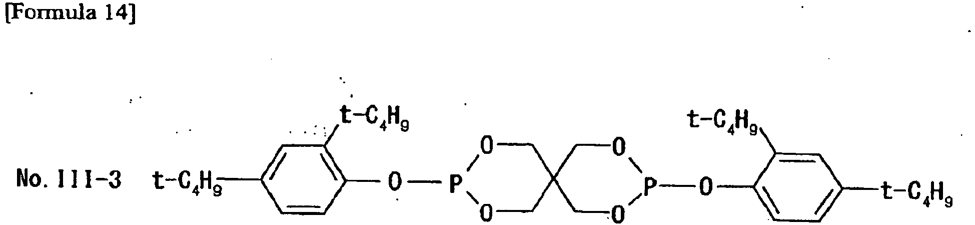

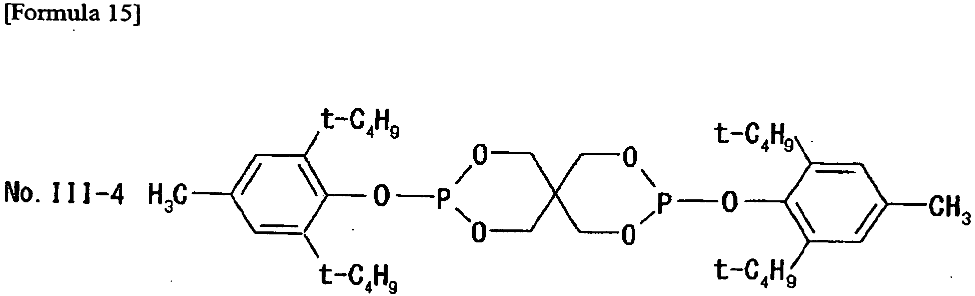

The content of the (b) organic phosphite esters is 0.001 to 10 parts by mass, preferably 0.01 to 5 parts by mass, more preferably 0.05 to 2 parts by mass based on 100 parts by mass of the vinyl chloride resin. When the ester is used in an amount of less than 0.001 part by mass, an effect of increasing stability is not sufficiently exerted. When the ester is used in an amount of more than 10 parts by mass, it is wasteful, in addition, there is a fear that such defects as discoloration and lowering of physical properties may be caused, and it is not preferable.

As the aminocrotonic acid esters that is the (c) component used in the present invention, there may be mentioned, for example, stearyl β-aminocrotonate, 1,4-butanediol bis(β-amino crotonate), β-ethylaminocrotonate, 1,3-butanediol bis(aminocrotonate), and the like.

The content of the (c) aminocrotonic acid esters is 0.001 to 10 parts by mass, preferably 0.01 to 5 parts by mass, more preferably 0.05 to 2 parts by mass based on 100 parts by mass of the vinyl chloride resin. When the ester is used in an amount of less than 0.001 part by mass, an effect of increasing stability is not sufficiently exerted. When the ester is used in an amount of more than 10 parts by mass, it is wasteful, in addition, there is a fear that such defects as discoloration or lowering of physical properties may be caused, and it is not preferable.

The polymerization method of the vinyl chloride resin used in the present invention is not particularly limited, and includes bulk polymerization, solution polymerization, suspension polymerization, emulsion polymerization, and the like. Examples of the resin include vinyl chloride resins such as polyvinyl chloride, chlorinated polyvinyl chloride, polyvinylidene chloride, chlorinated polyethylene, a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-styrene-acrylonitrile copolymer, a vinyl chloride-butadiene copolymer, vinyl chloride-isoprene copolymer, a vinyl chloride-chlorinated propylene copolymer, a vinyl chloride-vinylidene chloride-vinyl acetate terpolymer, a vinyl chloride-maleic acid ester copolymer, a vinyl chloride-methacrylic acid ester copolymer, a vinyl chloride-acrylonitrile copolymer, copolymers of vinyl chloride and various vinyl ethers; blends of these resins with each other; or blends, block copolymers, graft copolymers of these resins with other chlorine-free synthetic resins.

In the vinyl chloride resin composition of the present invention, plasticizers which are commonly used in the vinyl chloride resins may be used as (d) component. The plasticizers include, for example, phthalate plasticizers such as dibutyl phthalate, butyl hexyl phthalate, diheptyl phthalate, dioctyl phthalate, diisononyl phthalate, diisodecyl phthalate, dilauryl phthalate, dicyclohexyl phthalate, dioctyl terephthalate, and the like; adipate plasticizers such as dioctyl adipate, diisononyl adipate, diisodecyl adipate, di(butyldiglycol) adipate, and the like; phosphate plasticizers such as triphenyl phosphate, tricresyl phosphate, trixylenyl phosphate, tri(isopropylphenyl) phosphate, triethyl phosphate, tributyl phosphate, trioctyl phosphate, tri(butoxyethyl) phosphate, octyl/diphenyl phosphate, and the like; polyester plasticizers prepared using polyhydric alcohols and dibasic acids, and a monohydric alcohol or a monocarboxylic acid as a stopper as necessary, the polyhydric alcohols including ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, neopentyl glycol, and the like; and the dibasic acids including oxalic acid, malonic acid, succinic acid, glutaric acid, adipic acid, pimelic acid, suberic acid, azelaic acid, sebacic acid, phthalic acid, isophthalic acid, terephthalic acid, and the like. In addition, trimellitic acid type plasticizers, pyromellitic acid type plasticizers, tetrahydrophthalic acid type plasticizers, azelaic acid type plasticizers, sebacic acid type plasticizers, stearic acid type plasticizers, citric acid type plasticizers, biphenyltetracarboxylic acid ester plasticizers, chlorine-containing plasticizers, and the like may also be mentioned.

The content of the plasticizer is determined as necessary, but the effect of the present invention is better exerted by making the vinyl chloride resin composition a rigid or semirigid one, namely, by containing the plasticizer component in an amount of preferably less than 30 parts by mass, more preferably less than 10 parts by mass based on 100 parts by mass of the vinyl chloride resin.

Further, to the vinyl chloride resin composition of the present invention, there may be added other additives which are commonly used in the vinyl chloride resin compositions, such as metal salts of organic carboxylic acids, phenols, and organic phosphoric acids; zeolite compounds; hydrotalcite compounds; β-diketone compounds; epoxy compounds; polyhydric alcohols; antioxidants of phenol-type, sulfur-type, and the like; ultraviolet absorbers; light stabilizers such as hindered amines and the like; other inorganic metal compounds; and others.

The metals which constitute the metal salts of organic carboxylic acids, phenols, and organic phosphoric acids include lithium, potassium, sodium, calcium, magnesium, and the like.

Here, it is desirable that metal salts obtained from heavy metals such as zinc and the like are not substantially used.

The organic carboxylic acids include, for example, monobasic carboxylic acids such as acetic acid, propionic acid, butyric acid, valeric acid, caproic acid, enanthic acid, caprylic acid, pelargonic acid, 2-ethylhexylic acid, neodecanoic acid, capric acid, undecanoic acid, lauric acid, tridecanoic acid, myristic acid, palmitic acid, isostearic acid, stearic acid, 12-hydroxystearic acid, behenic acid, montanic acid, benzoic acid, monochlorobenzoic acid, p-tert-butylbenzoic acid, dimethylhydroxybenzoic acid, 3,5-di-tert-butyl-4-hydroxybenzoic acid, toluic acid, dimethylbenzoic acid, ethylbenzoic acid, cuminic acid, n-propylbenzoic acid, aminobenzoic acid, N,N-dimethylaminobenzoic acid, acetoxybenzoic acid, salicylic acid, p-tert-octylsalicylic acid, elaidic acid, oleic acid, linoleic acid, linolenic acid, thioglycolic acid, mercaptopropionic acid, octylmercaptopropionic acid, and the like; dibasic carboxylic acids such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citraconic acid, methaconic acid, itaconic acid, aconitic acid, thiodipropionic acid, and the like, or monoesters or monoamides thereof; di- or tri-ester compounds of tri- or tetrabasic carboxylic acids such as butanetricarboxylic acid, butanetetracarboxylic acid, hemimellitic acid, trimellitic acid, melophanic acid, pyromellitic acid, and the like.

Further, as the phenols, there may be cited, for example, tert-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tert-nonylphenol, decylphenol, tert-octylphenol, isohexylphenol, octadecylphenol, diisobutylphenol, methylpropylphenol, diamylphenol, methylisohexylphenol, methyl-tert-octylphenol, and the like.

As the organic phosphoric acids, there may be cited, for example, mono- or di-octyl phosphoric acid, mono- or di-dodecyl phosphoric acid, mono- or di-octadecyl phosphoric acid, mono- or di-(nonylphenyl) phosphoric acid, phosphonic acid nonylphenyl ester, phosphonic acid stearyl ester, mono- or di-octyl phophorous acid, mono- or di-octadecyl phosphorous acid, and the like.

Further, the metal salts of organic carboxylic acids, phenols, and organophosphoric acids may be acidic salts, neutral salts, basic salts, or perbasic complexes which are obtained by neutralizing part or all of the base contained in the basic salts with carbonic acid.

The zeolite compounds are alkali or alkaline earth metal aluminosilicates having specific three-dimensional zeolite crystal structures. The representative examples include A-type zeolite, X-type zeolite, Y-type zeolite, P-type zeolite, monodenite, analcite, sodalite family aluminosilicates, clinoptilolite, erionite, chabazite, and the like. These zeolite compounds may be either hydrates having crystal water (so-called zeolite water) or anhydrides obtained by removing the crystal water. Further, zeolites having particle sizes in a range of 0.1 to 50 µm may be used and, especially, those having particle sizes in a range of 0.5 to 10 µm are preferably used.

The hydrotalcite compounds are double salts of carbonic acid with magnesium and aluminum, as described in detail as the (a) component, perchloric acid-treated hydrotalcite, and are preferably the compounds represented by the general formula (I).

Further, the hydrotalcite compounds may also be used in a form where the surface thereof is coated with a higher fatty acid such as stearic acid, a metal salt of higher fatty acid such as an alkali metal salt of oleic acid, a metal salt of organic sulfonic acid such as an alkali metal salt of dodecylbenzenesulfonic acid, a higher fatty acid amide, a higher fatty acid ester, a wax, or the like.

The β-diketone compounds include, for example, dehydroacetic acid, dibenzoylmethane, palmitoylbenzoylmethane, stearoylbenzoylmethane, and the like. Metal salts of these compounds are equally useful.

Examples of the epoxy compounds include bisphenol type epoxy resins, novolac type epoxy resins, epoxidized soybean oil, epoxidized linseed oil, epoxidized tung oil, epoxidized fish oil, epoxidized beef tallow oil, epoxidized castor oil, epoxidized safflower oil, epoxidized tall oil fatty acid octyl ester, epoxidized linseed oil fatty acid butyl ester, methyl epoxystearate, butyl epoxystearate, 2-ethylhexyl epoxystearate, stearyl epoxystearate, tris(epoxypropyl) isocyanurate, 3-(2-xenoxy)-1,2-epoxypropane, epoxidized polybutadiene, bisphenol A diglycidyl ether, vinylcyclohexene diepoxide, dicyclopentadiene diepoxide, 3,4-epoxycyclohexyl-6-methyl epoxycyclohexanecarboxylate, bis(3,4-epoxycyclohexyl) adipate, and the like.

Examples of the polyhydric alcohols include, for example, pentaerythritol, dipentaerythritol, sorbitol, mannitol, trimethylolpropane, ditrimethylolpropane, partial ester of pentaerythritol or dipentaerythritol with stearic acid, bis(dipentaerythritol) adipate, glycerin, diglycerin, tris(2-hydroxyethyl) isocyanurate, and the like.

The phosphorus type antioxidants include, for example, triphenyl phosphite, tris(2,4-di-tert-butylphenyl) phosphite, tris(nonylphenyl) phosphite, tris(dinonylphenyl) phosphite, tris(mono/di-mixed nonylphenyl) phosphite, bis(2-tert-butyl-4,6-dimethylphenyl)ethyl phosphite, diphenylacid phosphite, 2,2'-methylenebis(4,6-di-tert-butylphenyl)octyl phosphite, diphenyldecyl phosphite, phenyldiisodecyl phosphite, tributyl phosphite, tris(2-ethylhexyl) phosphite, tridecyl phosphite, trilauryl phosphite, dibutylacid phosphite, dilaurylacid phosphite, trilauryl trithiophosphite, bis(neopentylglycol)-1,4-cyclohaxanedimethyl diphosphite, bis(2,4-di-tert-butylphenyl)pentaerythritol diphosphite, bis(2,6-di-tert-butyl-4-methylphenyl)pentaerythritol diphosphite, distearylpentaerythritol diphosphite, tetra(C12-15 mixed alkyl)-4,4'-isopropylidenediphenyl phosphite, bis[2,2'-methylenebis(4,6-diamylphenyl)]isopropylidenediphenyl phosphite, hydrogenated 4,4'-isopropylidenediphenol polyphosphite, tetra(tridecyl)-4,4'-butylidenebis(2-tert-butyl-5-methylphenol) diphosphite, hexa(tridecyl)-1,1,3-tris(2-methyl-5-tert-butyl-4-hydroxyphenyl)butane triphosphite, 9,10-dihydro-9-oxa-10-phosphaphenanthrene-10-oxide, 2-butyl-2-ethylpropanediol-2,4,6-tri-tert-butylphenol monophosphite, and the like.

As the phenol-type antioxidants, there may be cited, for example, 2,6-di-tert-butyl-p-cresol, 2,6-diphenyl-4-octadecyloxyphenol, stearyl(3,5-di-tert-butyl-4-hydroxyphenyl) propionate, distearyl(3,5-di-tert-butyl-4-hydroxybenzyl) phophonate, thiodiethylene glycol bis[(3,5-di-tert-butyl-4-hydroxyphenyl)propionate], 1,6-hexamethylene bis[(3,5-di-tert-butyl-4-hydroxyphenyl)propionate], 1,6-hexamethylene bis[(3,5-di-tert-butyl-4-hydroxyphenyl)propionamide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butyric acid] glycol ester, 4,4'-butylidenebis(6-tert-butyl-m-cresol), 2,2'-ethylidenebis(4,6-di-tert-butylphenol), 2,2'-ethylidenbis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl] terephthalate, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl] isocyanurate, tetrakis[methylene-3-(3,5-di-tert-butyl-4-hydroxyphenyl)propionate]methane, 2-tert-butyl-4-methyl-6-(2-acryloyloxy-3-tert-butyl-5-methylbenzyl)phenol, 3,9-bis[1,1-dimethyl-2-{(3-tert-butyl-4-hydroxy-5-methylphenyl)propionyloxy}ethyl]-2,4,8,10-tetraoxaspiro[5.5]undecane, triethylene glycol bis[(3-tert-butyl-4-hydroxy-5-methylphenyl)propionate], and the like.

The sulfur type antioxidants include, for example, dialkyl thiodipropionates such as dilauryl, dimyristyl and distearyl thiodipropionates, and the like; β-alkylmercaptopropionic acid esters such as pentaerythritol tetra(β-dodecylmercaptopropionate), and the like.

The ultraviolet absorbers include, for example, 2-hydroxybenzophenones such as 2,4-dihydroxybenzophenone, 2-hydroxy-4-methoxybenzophenone, 2-hydroxy-4-octoxybenzophenone, 5,5'-methylenebis(2-hydroxy-4-methoxybenzophenone), and the like; 2-(2'-hydroxyphenyl)benzotriazoles such as 2-(2'-hydroxy-5'-methylphenyl)benzotriazole, 2-(2'-hydroxy-3',5'-di-tert-butylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-benzotriazolyl)phenol, and the like; benzoates such as phenyl salicilate, resorcinol monobenzoate, 2,4-di-tert-butylphenyl-3',5'-di-tert-butyl-4'-hydroxy benzoate, hexadecyl-3,5-di-tert-butyl-4-hydroxy benzoate, and the like; substituted oxanilides such as 2-ethyl-2'-ethoxyoxanilide, 2-ethoxy-4'-dodecyloxanilide, and the like; cyanoacrylates such as ethyl-α-cyano-β,β-diphenyl acrylate, methyl-2-cyano-3-methyl-3-(p-methoxyphenyl) acrylate, and the like.

The hindered amine type light stabilizers include, for example, 2,2,6,6-tetramethyl-4-piperidyl stearate, 1,2,2,6,6-pentamethyl-4-piperidyl stearate, 2,2,6,6-tetramethyl-4-piperidyl benzoate, N-(2,2,6,6-tetramethyl-4-piperidyl)dodecyl succinimide, 1-[(3,5-di-tert-butyl-4-hydroxyphenyl)propionyloxyethyl]-2,2,6,6-tetramethyl-4-piperi dyl-(3,5-di-tert-butyl-4-hydroxyphenyl) propionate, bis(2,2,6,6-tetramethyl-4-piperidyl) sebacate, bis(1,2,2,6,6-pentamethyl-4-piperidyl) sebacate, bis(1,2,2,6,6-pentamethyl-4-piperidyl)-2-butyl-2-(3,5-di-tert-butyl-4-hydroxybenzyl) malonate, N,N'-bis(2,2,6,6-tetramethyl-4-piperidyl)hexamethylenediamine, tetra(2,2,6,6-tetramethyl-4-piperidyl) butanetetracarboxylate, tetra(1,2,2,6,6-pentamethyl-4-piperidyl) butanetetracarboxylate, bis(2,2,6,6-tetramethyl-4-piperidyl)di(tridecyl) butanetetracarboxylate, bis(1,2,2,6,6-pentamethyl-4-piperidyl)di(tridecyl) butanetetracarboxylate, 3,9-bis[1,1-dimethyl-2-{tris(2,2,6,6-tetramethyl-4-piperidyloxycarbonyloxy)butylcarbo nyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyloxy)butylca rbonyloxy}ethyl]-2,4,8,10-tetraoxaspiro[5.5]undecane, 1,5,8,12-tetrakis[4,6-bis{N-(2,2,6,6-tetramethyl-4-piperidyl)butylamino}-1,3,5-triazine -2-yl]-1,5,8,12-tetraazadodecane, 1-(2-hydroxyethyl)-2,2,6,6-tetramethyl-4-piperidinol/dimethyl succinate condensate, 2-tert-octylamino-4,6-dichloro-s-triazine/N,N'-bis(2,2,6,6-tetramethyl-4-piperidyl)hex amethylenediamine condensate, N,N'-bis(2,2,6,6-tetramethyl-4-piperidyl)hexamethylenediamine/dibromoethane condensate, and the like.

The inorganic metal compounds include inorganic acid salts, their basic salts and others of the metals mentioned in the foregoing as those constituting the metal salts of organic carboxylic acids and the like, for example, oxides, hydroxides, halides, perchlorates, carbonates, sulfates, nitrates, silicates, phosphates, and the like.

Further, in the vinyl chloride resin composition of the present invention fillers such as calcium carbonate, silica, clay, glass beads, mica, sericite, glass flake, asbestos, wollastinite, pottasium titanate, PMF, gypsum fiber, xonotlite, MOS, phosphate fiber, glass fiber, carbon fiber, aramid fiber, and the like; and pigments such as titanium oxide, red iron oxide, chrome yellow, ultramarine, carbon black, azo type pigments, phthalocyanine type pigments, quinacridone type pigments, dioxadine pigments, and the like, may be used.

Furthermore, in the vinyl chloride resin composition of the present invention, impact resistance improvers, crosslinking agents, blowing agents, antistatic agents, antifog additives, anti-plateout agents, surface treating agents, lubricants, flame retardants, fluorescent agents, fungicides, germicides, metal deactivators, mold release agents, processing aids, and the like, may be blended, if necessary.

Further, the vinyl resin composition of the present invention may be used independently of the processing methods for vinyl chloride resins. For example, the composition may be used suitably in such processes as calendering, roll forming, extrusion molding, melt rolling, injection molding, pressure forming, paste molding, powder molding, foam molding, and the like.

The vinyl chloride resin composition of the present invention may be used as building materials such as wall materials, floor materials, window frames, corrugated sheets, rainwater pipes, and the like; automotive interior and exterior materials; fish and food packing materials such as trays; sundry goods such as packing, gaskets, hoses, pipes, joints, sheets, toys, and the like.

### EXAMPLES

Hereinafter, the vinyl chloride resin composition of the present invention will be described in further detail in terms of Examples but the present invention is not limited in any way by these Examples.

### Example 1

The following composition was blended by a Henschel mixer, and then the blend was roll-kneaded under a condition of 190°C×30 rpm×0.6 mm×5 minutes to prepare a sheet. The obtained sheet was subjected to the following thermal stability test and discoloration test. The results are shown in the following Table 1.

Thermal stability test: the obtained sheet was placed in a Geer oven at 190°C and the time until blackening of the sheet was evaluated by a 10 minute interval.

Discoloration test: the obtained sheet was heat-pressed under a condition of 180°C×5 minutes×1 mm and discoloration of the sheet was evaluated by visual observation. The results of the evaluation are shown on a scale of 1 to 10, in which 1 represents a state where no discoloration is observed at all, and show a state that the larger the number is, the stronger the discoloration is.

| (Formulation) | Parts by mass |
|---|---|
| Vinyl chloride resin | 100 |
| Heavy calcium carbonate | 5 |
| Ester type wax | 0.5 |
| Calcium stearate | 0.2 |
| Magnesium hydroxide | 0.2 |
| Titanium dioxide | 0.5 |
| Tetrakis[methylene-3-(3,5-di-tert-butyl-4-hydroxyphenyl)propionate]methane | |
| | 0.1 |
| Tris(2-glycidyloxyethyl) isocyanurate | 0.5 |
| Compound II-2 | 0.1 |
| Test compound (see Table 1) | (see Table 1) |

**[table 1]**

| | Example | | | | | Comparative. Example | | |
|---|---|---|---|---|---|---|---|---|
| | 1-1 | 1-2 | 1-3 | 1-4 | 1-5 | 1-1 | 1-2 | 1-3 |
| Test compound | | | | | | | | |
| (Parts by mass) | | | | | | | | |
| ACA-1 | 0.1 | 0.2 | 0.2 | | 0.1 | | 0.1 | |
| ACA-2 | | | | 0.1 | | | | |
| ACA-Comparison | | | | | | 0.2 | | |
| | | | | | | | | |
| CHT-1 | 0.1 | 0.1 | | 0.1 | 0.2 | 0.1 | | |
| CHT-2 | | | 0.1 | | | | | |
| HT | | | | | | | 0.2 | |
| | | | | | | | | |
| | | | | | | | | |
| Evaluation result | | | | | | | | |
| Thermal stability | 60 | 60 | 60 | 50 | 60 | 40 | 60 | 30 |
| Discoloration | 5 | 3 | 2 | 7 | 4 | 9 | 8 | 10 |

| | | | | | | | | |
|---|---|---|---|---|---|---|---|---|
| ACA-1: 1,4-butanediol bis (β-aminocrotonate) ACA-2: stearyl β-aminocrotonate ACA-Comparison: dibenzoylmethane CHT-1: Mg₄Al₂(OH)₁₂CO₃·3H₂O, treated with 60 mol % perchloric acid CHT-2: Mg₄Al₂(OH)₁₂CO₃·3H₂O, treated with 80 mol % perchloric acid HT: Mg₄Al₂(OH)₁₂CO₃·3H₂O | | | | | | | | |

### [Example 2]

The following composition was blended by a Henschel mixer, and then the blend was roll-kneaded under a condition of 190°C×30 rpm×0.6 mm×5 minutes to prepare a sheet. The obtained sheet was subjected to the following thermal stability test and discoloration test. The results are shown in the following Table 2.

Thermal stability test: the obtained sheet was placed in a Geer oven at 190°C and the time until blackening of the sheet was evaluated by a 10 minute interval.

Discoloration test: The obtained sheet was heat-pressed under a condition of 180°C×5 minutes×1 mm and discoloration of the sheet was evaluated by visual observation. The results of the evaluation are shown on a scale of 1 to 10, in which 1 represents a state where no discoloration is observed at all, and show a state that the larger the number is, by stronger discoloration is.

| (Formulation) | Parts by mass |
|---|---|
| Vinyl chloride resin | 100 |
| Heavy calcium carbonate | 5 |
| Ester-type wax | 0.5 |
| Calcium stearate | 0.2 |
| Magnesium hydroxide | 0.2 |
| Titanium dioxide | 0.5 |
| Tetrakis[methylene-3-(3,5-di-tert-butyl-4-hydroxyphenyl)propionate]methane | 0.2 |
| Tris(2-glycidyloxyethyl) isocyanurate | 0.5 |
| ACA-1 | 0.2 |
| CHT-2 | 0.1 |
| Test compound (see Table 2) | (see Table 2) |

**[Table 2]**

| | Example | | | | Reference Example | Reference Example | Comparative Example |
|---|---|---|---|---|---|---|---|
| | 2-1 | 2-2 | 2-3 | 2-4 | 2-5 | 2-6 | 2-1 |
| Test compound | | | | | | | |
| (Parts by mass) | | | | | | | |
| Compound No. II-2 | 0.2 | | | | | | |
| Compound No. III-1 | | 0.2 | | | | | |
| Compound No. III-3 | | | 0.2 | | | | |
| Compound No. III-4 | | | | 0.2 | | | |
| Compound P1 | | | | | 0.2 | | |
| Compound P2 | | | | | | 0.2 | |
| | | | | | | | |
| | | | | | | | |
| | | | | | | | |
| Evaluation result | | | | | | | |
| Thermal stability | 70 | 70 | 70 | 70 | 60 | 60 | 60 |
| Discoloration | 1.5 | 2 | 2.5 | 2.5 | 3 | 3 | 4 |

| | | | | | | | |
|---|---|---|---|---|---|---|---|
| P1: tris(2,4-di-tert-butylphenyl) phosphite P2: tris(nonylphenyl) phosphite | | | | | | | |

From the results shown in Tables 1 and 2, the following are apparent.

When organic phosphite ester and aminocrotonic acid ester compounds are used together with ordinary hydrotalcite (Comparative Example 1-2) in the vinyl chloride resin, the resin is inferior in discoloration resistance; when perchloric acid-treated hydrotalcite and an organic phosphite ester are used together with a β-diketone compound (Comparative Example 1-1), both discoloration resistance and thermal stability are deteriorated. Further, when an organic phosphite ester is not used together with perchloric acid-treated hydrotalcite and an aminocrotonic acid ester compound (Comparative Example 2-1), discoloration resistance is insufficient.

In contrast, when perchloric acid-treated hydrotalcite, organic phosphite esters, and aminocrotonic acid ester compounds are used together (Example), thermal resistance and discoloration resistance are excellent. Especially, when the compound corresponding to formula (II) or a compound corresponding to formula (III) are used as the organic phosphite esters (Examples 2-1 to 2-4), excellent thermal resistance and discoloration resistance are attained.

### INDUSTRIAL APPLICABILITY

The vinyl chloride resin composition of the present invention is excellent in thermal stability and heat aging resistance without containing heavy metal-based stabilizers, especially, can provide molded goods having excellent discoloration resistance during processing and using. The composition can be suitably used especially in applications such as pipes, profile extruded articles, injection molded goods.

## Claims

1. A vinyl chloride resin composition, comprising (a) 0.001 to 10 parts by mass of at least one kind of perchloric acid-treated hydrotalcite , (b) 0.001 to 10 parts by mass of at least one kind of organic phosphite ester, and (c) 0.001 to 10 parts by mass of at least one kind selected from aminocrotonic acid esters based on 100 parts by mass of a vinyl chloride resin,
wherein the organic phosphite ester (b) is an organic cyclic phosphite compound represented the following general formula (II): 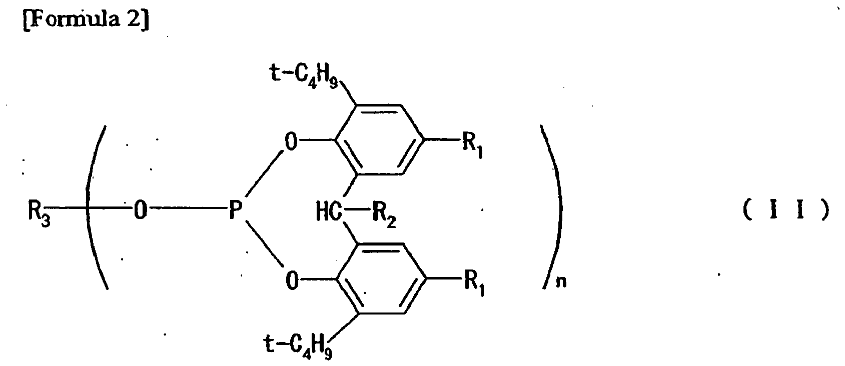 wherein R₁ represents an alkyl group having 1 to 9 carbon atoms, R₂ represents a hydrogen atom or an alkyl group having 1 to 4 carbon atoms, R₃ represents a monovalent group having 1 to 30 carbon atoms or a bivalent group having 2 to 20 carbon atoms which may have an ether bond, n represents 1 or 2 or
wherein the (b) organic phosphite ester is an organic cyclic phosphite compound represented by the following general formula (III): 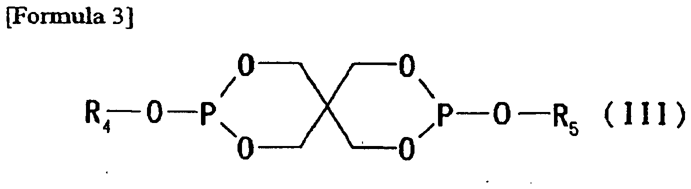 wherein R₄ and R₅ represent an alkyl group having 4 to 20 carbon atoms or a phenyl group which may be mono-, di-, or tri-substituted with alkyl groups having 1 to 5 carbon atoms, wherein the vinyl chloride resin is selected from polyvinyl chloride, chlorinated polyvinyl chloride, polyvinylidene chloride, chlorinated polyethylene, a vinyl chloride-vinyl acetate copolymer, a vinyl chloride-ethylene copolymer, a vinyl chloride-propylene copolymer, a vinyl chloride-styrene copolymer, a vinyl chloride-isobutylene copolymer, a vinyl chloride-vinylidene chloride copolymer, a vinyl chloride-styrene-maleic anhydride terpolymer, a vinyl chloride-styrene-acrylonitrile copolymer, a vinyl chloride-butadiene copolymer, vinyl chloride-isoprene copolymer, a vinyl chloride-chlorinated propylene copolymer, a vinyl chloride-vinylidene chloride-vinyl acetate terpolymer, a vinyl chloride-maleic acid ester copolymer, a vinyl chloride-methacrylic acid ester copolymer, a vinyl chloride-acrylonitrile copolymer, copolymers of vinyl chloride and various vinyl ethers; blends of these resins with each other; or blends, block copolymers, graft copolymers of these resins with other chlorine-free synthetic resins.

2. The vinyl chloride resin composition according to claim 1, wherein it is a rigid or semirigid composition containing (d) a plasticizer component in an amount of less than 30 parts by mass.

3. The vinyl chloride resin composition according to claim 1 or claim 2, wherein the (a) perchloric acid-treated hydrotalcite is treated with 0.1 to 2 moles of perchloric acid based on 1 mole of hydrotalcite represented by the general formula (I):
[Formula 1]
MgₓAl₂(OH)₂ₓ₊₄·CO₃·mH₂O (I)
wherein x is an integer equal to 2 or more but less than 20, and m represents an actual number.

4. The vinyl chloride resin composition according to claim 1,
wherein the aminocrotonic acid ester (c) is 1,4-butanediol bis(β-aminocrotonate).

## Patentansprüche

1. Vinylchloridharzzusammensetzung umfassend (a) 0,001 bis 10 Gewichtsteile von mindestens einer Art von mit Perchlorsäure behandeltem Hydrotalkit, (b) 0,001 bis 10 Gewichtsteile von mindestens einer Art von organischem Phosphitester, und (c) 0,001 bis 10 Gewichtsteile von mindestens einer Art ausgewählt aus Aminocrotonsäureestern basierend auf 100 Gewichtsteilen eines Vinylchloridharzes, wobei der organische Phosphitester (b) eine organische zyklische Phosphitverbindung ist, die durch die folgende allgemeine Formel (II) dargestellt wird: 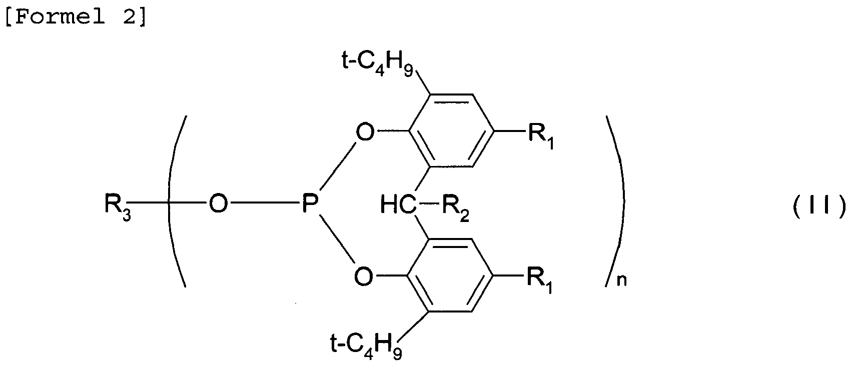 wobei R₁ eine Alkylgruppe mit 1 bis 9 Kohlenstoffatomen darstellt, R₂ ein Wasserstoffatom oder eine Alkylgruppe mit 1 bis 4 Kohlenstoffatomen darstellt, R₃ eine monovalente Gruppe mit 1 bis 30 Kohlenstoffatomen oder eine bivalente Gruppe mit 2 bis 20 Kohlenstoffatomen darstellt, die eine Etherbindung aufweisen können, n 1 oder 2 darstellt, oder
wobei der organische Phosphitester (b) eine organische zyklische Phosphitverbindung ist, die durch die folgende allgemeine (III) dargestellt wird: 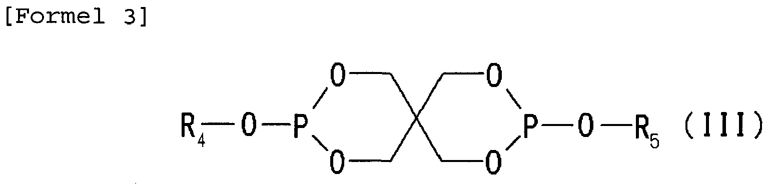 wobei R₄ und R₅ eine Alkylgruppe mit 4 bis 20 Kohlenstoffatomen oder eine Phenylgruppe darstellen, die einfach, zweifach oder dreifach mit Alkylgruppen mit 1 bis 5 Kohlenstoffatomen substituiert sein kann, wobei das Vinylchloridharz ausgewählt wird aus Polyvinylchlorid, chloriertem Polyvinylchlorid, Polyvinylidenchlorid, chloriertem Polyethylen, einem Vinylchlorid - Vinylacetat Copolymer, einem Vinylchlorid - Ethylen Copolymer, einem Vinylchlorid - Propylen Copolymer, einem Vinylchlorid - Styrol Copolymer, einem Vinylchlorid - Isobutylen Copolymer, einem Vinylchlorid - Vinylidenchlorid Copolymer, einem Vinylchlorid - Styrol - Maleinsäureanhydrid Terpolymer, einem Vinylchlorid - Styrol - Acrylnitril Copolymer, einem Vinylchlorid - Butadien Copolymer, einem Vinylchlorid - Isopren Copolymer, einem Vinylchlorid - chloriertes Propylen Copolymer, einem Vinylchlorid - Vinylidenchlorid - Vinylacetat Terpolymer, einem Vinylchlorid - Maleinsäureester Copolymer, einem Vinylchlorid - Methacrylsäureester Copolymer, einem vinylchlorid - Acrylnitril Copolymer, Copolymeren von Vinylchlorid und verschiedenen Vinylethern; Mischungen dieser Harze miteinander; oder Mischungen, Blockcopolymeren, Pfropfcopolymeren von diesen Harzen mit anderen chlorfreien synthetischen Harzen.

2. Vinylchloridharzzusammensetzung nach Anspruch 1, wobei sie eine starre oder halbstarre Zusammensetzung ist, die (d) eine Weichmacherkomponente in einer Menge von weniger als 30 Gewichtsteilen enthält.

3. Vinylchloridharzzusammensetzung nach Anspruch 1 oder Anspruch 2, wobei der (a) mit Perchlorsäure behandelte Hydrotalkit mit 0,1 bis 2 Mol Perchlorsäure behandelt wird basierend auf einem Mol Hydrotalkit, der durch die allgemeine Formel (I) dargestellt wird:
[Formel 1]
MgₓAl₂(OH)₂ₓ₊₄·CO_{3·}mH₂O (I)
wobei x eine ganze Zahl von 2 oder mehr aber weniger als 20 ist und m eine reale Zahl darstellt.

4. Vinylchloridharzzusammensetzung nach Anspruch 1, wobei der Aminocrotonsäureester (c) 1,4-Butandiol-bis(β-aminocrotonat) ist.

## Revendications

1. Composition de résine de chlorure de vinyle, comprenant (a) de 0,001 à 10 partie(s) en masse d'au moins un type d'hydrotalcite traitée à l'acide perchlorique, (b) de 0,001 à 10 partie(s) en masse d'au moins un type d'ester de phosphite organique, et (c) de 0,001 à 10 partie(s) en masse d'au moins un type choisi parmi des esters d'acide aminocrotonique sur la base de 100 parties en masse d'une résine de chlorure de vinyle, dans laquelle l'ester de phosphite organique (b) est un composé de phosphite cyclique organique représenté par la formule générale suivante (II): 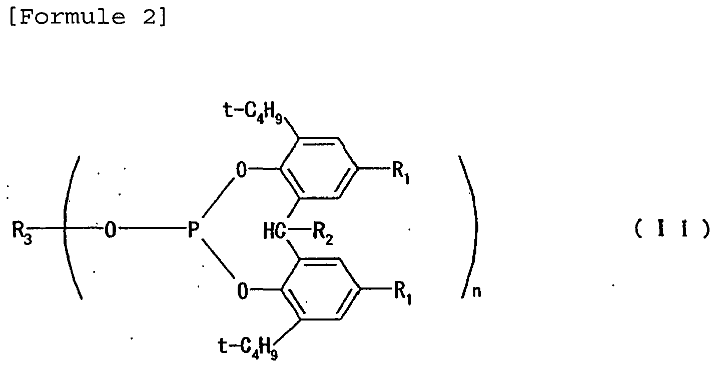 où R₁ représente un groupe alkyle ayant 1 à 9 atome (s) de carbone, R₂ représente un atome d'hydrogène ou un groupe alkyle ayant 1 à 4 atome(s) de carbone, R₃ représente un groupe monovalent ayant de 1 à 30 atome(s) de carbone ou un groupe bivalent ayant 2 à 20 atomes de carbone qui peut avoir une liaison éther, n représente 1 ou 2, ou
où (b) l'ester de phosphite organique est un composé de phosphite cyclique organique représenté par la formule générale suivante (III): 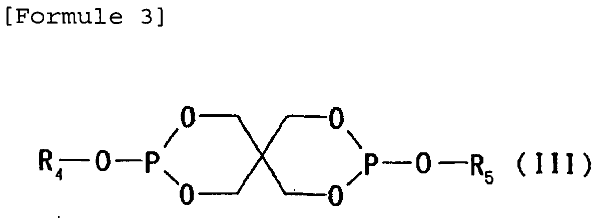 où R₄ et R₅ représentent un groupe alkyle ayant 4 à 20 atomes de carbone ou un groupe phényle qui peut être mono-, di-, ou tri-substitué par des groupes alkyle ayant 1 à 5 atome(s) de carbone,
dans laquelle
la résine de chlorure de vinyle est choisie parmi du chlorure de polyvinyle, du chlorure de polyvinyle chloré, du chlorure de polyvinylidène, du polyéthylène chloré, un copolymère d'acétate de vinyle-chlorure de vinyle, un copolymère d'éthylène-chlorure de vinyle, un copolymère de propylène-chlorure de vinyle, un copolymère de styrène-chlorure de vinyle, un copolymère d'isobutylène-chlorure de vinyle, un copolymère de chlorure de vinylidène-chlorure de vinyle, un terpolymère d'anhydride maléique-styrène- chlorure de vinyle, un copolymère d'acrylonitrile-styrène-chlorure de vinyle, un copolymère de butadiène-chlorure de vinyle, un copolymère d'isoprène-chlorure de vinyle, un copolymère de propylène chloré-chlorure de vinyle, un terpolymère d'acétate de vinyle-chlorure de vinylidène-chlorure de vinyle, un copolymère d'ester d'acide maléique-chlorure de vinyle, un copolymère d'ester d'acide méthacrylique-chlorure de vinyle, un copolymère d'acrylonitrile-chlorure de vinyle, des copolymères de chlorure de vinyle et de divers éthers vinyliques ; des mélanges de ces résines les unes avec les autres ; ou des mélanges, des copolymères à blocs, des copolymères greffés, de ces résines avec d'autres résines synthétiques exemptes de chlore.

2. Composition de résine de chlorure de vinyle selon la revendication 1, dans laquelle il s'agit d'une composition rigide ou semi-rigide contenant (d) un composant plastifiant en une quantité inférieure à 30 parties en masse.

3. Composition de résine de chlorure de vinyle selon la revendication 1 ou 2, dans laquelle (a) de l'hydrotalcite traitée à l'acide perchlorique est traitée avec 0,1 à 2 mole (s) d'acide perchlorique sur la base de 1 mole d'hydrotalcite représentée par la formule générale (I):
[Formule 1]
MgₓAl₂(OH)₂ₓ₊₄.CO₃.mH₂O (I)
où x est un nombre entier supérieur ou égal à 2 mais inférieur à 20, et m représente un nombre réel.

4. Composition de résine de chlorure de vinyle selon la revendication 1,
dans laquelle l'ester d'acide aminocrotonique (c) est le 1,4-butanediol bis(β-aminocrotonate).
